Europäisches Patentamt

European Patent Office

Office européen des brevets

(19)

(11) **EP 1 205 856 A2**

(12) **EUROPEAN PATENT APPLICATION**

(43) Date of publication:
**15.05.2002 Bulletin 2002/20**

(51) Int Cl.$^7$: **G06F 17/30**

(21) Application number: **01300749.7**

(22) Date of filing: **29.01.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **14.11.2000 US 248012 P**
**20.12.2000 KR 2000079181**

(71) Applicants:
• **SAMSUNG ELECTRONICS CO., LTD.**
**Suweon-city, Kyungki-do (KR)**
• **The Regents of the University of California**
**Oakland, CA 94607-5200 (US)**

(72) Inventors:
• **Choi, Yang-lim**
**Bundang-gu, Seongnam-si, Gyeonggi-do (KR)**
• **Huh, Youngsik**
**Suwon-city, Kyungki-do (KR)**
• **Manjunath, Bangalore S., Dpt.of Electrical and**
**Santa Barbara, CA 93106-9560 (US)**
• **Wu, Peng,**
**Department of Electrical and Computer**
**Santa Barbara,CA 93106-9560 (US)**

(74) Representative: **Geary, Stuart Lloyd et al**
**Venner, Shipley & Co.,**
**20 Little Britain**
**London EC1A 7DH (GB)**

(54) **Adaptive search method in feature vector space**

(57)     An adaptive search method in feature vector space which can quickly search the feature vector space indexed based on approximation for a feature vector having features similar to a query vector according to a varying distance measurement is provided. The adaptive search method includes the steps of (a) performing a similarity measurement on a given query vector within the feature vector space, and (b) applying search conditions limited by the result of the similar measurement obtained in the step (a) and performing a changed similarity measurement on the given query vector. According to the adaptive search method, the number of candidate approximation regions is reduced during a varying distance measurement such as an on-line retrieval, which improves the search speed.

**EP 1 205 856 A2**

**Description**

The present invention relates to a method of searching a feature vector space for a feature vector which has similar features to a query vector.

In a multimedia database related to a multimedia application, multimedia contents are typically represented by feature vectors. Similarity of objects is determined by a distance measurement defined by feature distances between the query vector and feature vectors in a feature vector space.

To provide more precise retrieval, a distance measurement may be iteratively performed using collected information such as user feedback. However, a conventional search method does not consider how to iteratively perform a distance measurement according to varying factors in a large database. In particular, a conventional indexing method operating in a feature vector space has not addressed how to perform a search quickly in an environment where the distance measurement is changing, such as in on-line retrieval. Thus, there still remains a need for accelerating searching in an environment where a distance measurement is varying.

To solve the above problems, it is an aim of the present invention to provide a method for quickly and iteratively searching an approximated feature vector space for a feature vector having features similar to a query vector according to varying measure conditions.

Accordingly, to achieve the above objective, the present invention provides a method for adaptively searching a feature vector space which includes the steps of (a) performing a similarity measurement on a given query vector within the feature vector space, and (b) applying search conditions limited by the result of the similar measurement obtained in the step (a) and performing a changed similarity measurement on the given query vector.

Preferably, the step (b) includes the steps of (b-1) obtaining candidate approximation regions by performing_approximation level filtering according to a distance measurement limited by the result of the similar measurement obtained in the step (a), and (b-2) performing data level filtering on the obtained candidate approximation regions.

Preferably, the step (a) includes the steps of (a-1) obtaining a predetermined number of nearest candidate approximation regions by measuring the distances between the query vector and approximation regions, and (a-2) obtaining K nearest neighbor feature vectors by measuring the distance between each of all feature vectors in the obtained candidate approximation regions and the query vector, where K is a positive integer.

Preferably, the step (b-1) includes the steps of (b-1-1) calculating K'-th shortest distance for the K nearest neighbor feature vectors obtained according to the previous distance measurement according to the changed distance measurement where K' is a positive integer, and setting the calculated distance as $r_{t+1}^{u}$, and (b-1-2) calculating K'-th smallest lower bound for the predetermined number of candidate approximation regions obtained according to the previous distance measurement according to the changed distance measurement and set as $\phi_{t+1}^{u}$

Preferably, the step (b-1) includes the steps of (b-1-3a) measuring the distance $L_i(W_{t+1})$ between the lower bound of an approximation region and a query vector for a new distance measurement, wherein N is a positive integer denoting the number of objects in the feature vector space and i is a variable ranging from 1 to N, (b-1-4) comparing the distance $L_i(W_{t+1})$ obtained in the step (b-1-3a) with a minimum value

$$\min\left(\phi, r_{t+1}^{u}, \phi_{t+1}^{u}\right)$$

of K-th smallest upper bound $\phi$, $r_{t+1}^{u}$, and $\phi_{t+1}^{u}$, (b-1-5) if the distance $L_i(W_{t+1})$ is less than or equal to the minimum value

$$\min\left(\phi, r_{t+1}^{u}, \phi_{t+1}^{u}\right)$$

setting the corresponding approximation region as a candidate approximation region, and (b-1-6) if the distance $L_i(W_{t+1})$ is greater than the minimum value min

$$\min\left(\phi, r_{t+1}^{u}, \phi_{t+1}^{u}\right),$$

excluding the corresponding approximation region.

Furthermore, the step (b-1) further includes (b-1-3b) measuring the distance $U_i(W_{t+1})$ between the upper bound of the approximation region and the query vector for the new distance measurement, assuming that N is a positive integer denoting the number of objects in the feature vector space and i is a variable ranging from 1 to N, and (b-1-7) updating the K-th smallest upper bound _ referring to the distance $U_i(W_{t+1})$.

Furthermore, the steps of (b-1-1) - (b-1-6) are repeated until the approximation level filtering is performed on all N approximation regions where N is a positive integer denoting the number of objects in a database.

Preferably, the step (b-2) includes the steps of (b-2-1) performing a distance measurement between each of all feature vectors in the candidate approximation regions and the query vector, and (b-2-2) determining K' nearest neighbor vectors as retrieved vectors depending on the result of the distance measurements performed in the step (b-2-1).

An embodiment of the present invention will now be described, by way of example with reference to the accompanying drawings, in which:

Figures 1A and 1B are flowcharts showing main steps of a method for adaptively searching a feature vector space according to the present invention; and
Figure 2 is a pseudo code listing for explaining approximation level filtering.

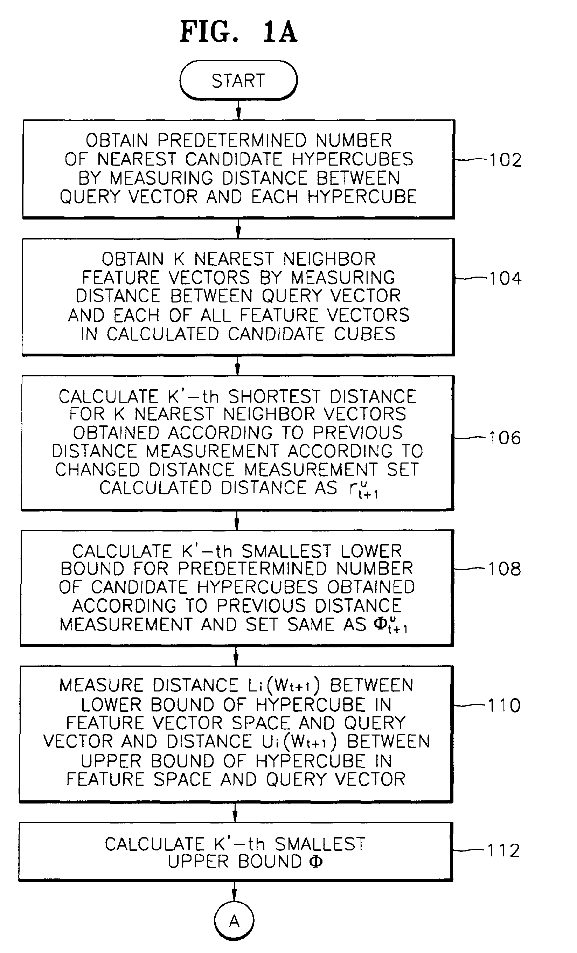

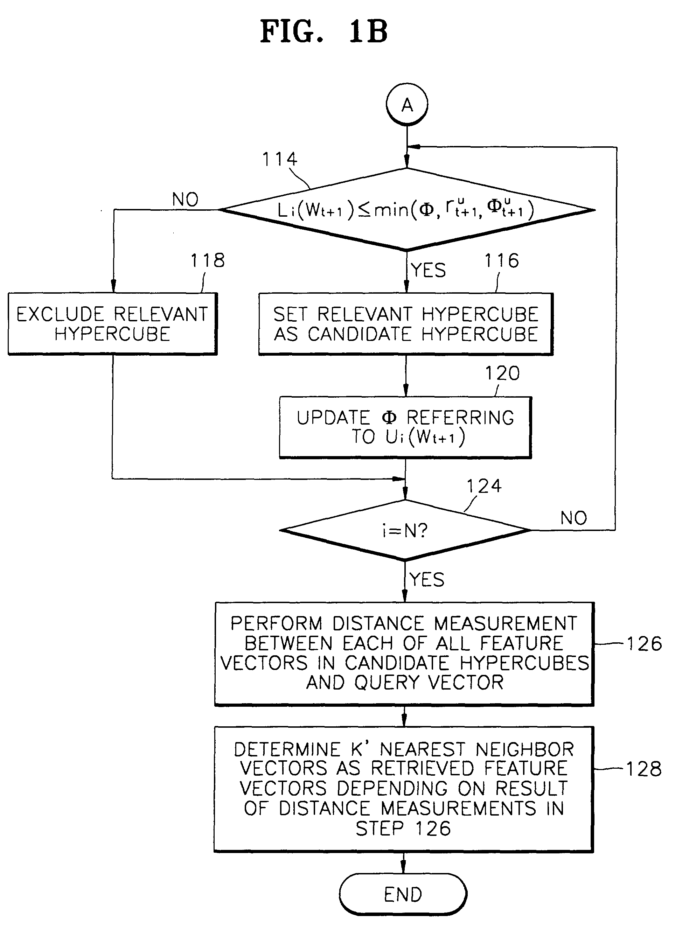

The main steps of an adaptive search method according to the present invention will now be described with reference to Figures 1A and 1B. A database in which multimedia contents are stored is represented as a feature vector space. In this embodiment, the feature vector space is approximated with a plurality of hypercubes. Furthermore, assuming that M is a positive integer denoting the dimensionality of feature vectors used to describe an image/video object, and N is a positive integer denoting the number of objects in the database, feature vector $\bar{F}$ and feature vector $\bar{Q}$ of a query object Q are defined as $\bar{F} = [F_{i1}, F_{i2},..., F_{iM}]$ and $\bar{Q} = [q_{i1}, q_{i2},..., q_{iM}]$, respectively. Here, the database is represented as a feature vector space and the feature vector $\bar{Q}$ of a query object Q is hereinafter called the query vector.

First, a predetermined number of nearest candidate hypercubes are obtained by measuring the distance between a query vector and each of the hypercubes (step 102). Then, K of nearest neighbour feature vectors are determined by measuring the distance between the query vector and each of the feature vectors in the predetermined number of candidate hypercubes obtained in the step 102, where K is a positive integer (step 104). The distance between the query vector and each of the feature vectors is measured by calculating weighted Euclidean distance. The weighted Euclidean distance is calculated by Equation (1):

$$d\left(W_t, \bar{F}_t, \bar{Q}\right) = \left(\bar{Q} - \bar{F}\right)^T W_t \left(\bar{Q} - \bar{F}\right) \qquad (1)$$

where $W_t$ is a full symmetric function matrix at iteration t and updated at every iteration.

Then, for example, the user selects a plurality of multimedia contents similar to those that he or she desires to find among calculated multimedia contents and attempts a search again. Thus, feedback for changed search conditions can be provided from the user, which is called relevance feedback. According to the present invention, features for which feedback is provided from the user are reflected in a distance measurement for the next search, thereby changing distance measurement conditions.

According to the present invention, approximation level filtering is performed using information from previous iteration t. $W_t$, $C_1(W_t)$, and $R_t$ denote a distance measurement function used in the previous iteration t, approximation regions that passed the previous iteration t or hypercubes in this embodiment, and vectors retrieved using $W_t$, respectively.

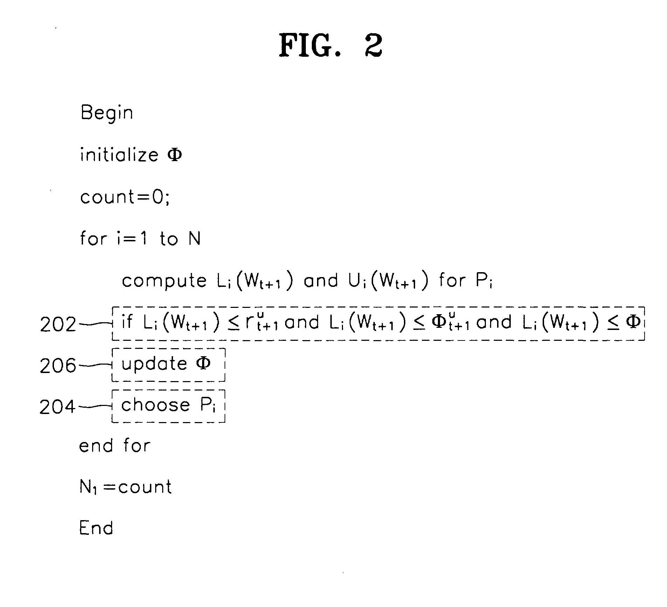

Figure 2 shows a pseudo code listing for explaining the step of approximation level filtering. The approximation level filtering is performed using the information from the previous iteration t. Referring to Figure 2, during the approximation level filtering, K'-th shortest distance is calculated for the K nearest neighbour feature vectors obtained, according to the previous distance measurement, according to the changed distance measurement where K' is a positive integer, and the calculated distance is set as $r_{t+1}^u$ (step 106). Furthermore, K'-th smallest lower bound is calculated for the predetermined number of candidate hypercubes obtained according to the previous distance measurement according to the changed distance measurement and set as $\phi_{t+1}^u$ (step 108).

Then, assuming that N is the number of objects or approximation regions in the approximated feature vector space or a positive integer denoting the number of hypercubes in this embodiment and i is a variable ranging from 1 to N, the distance $L_i(W_{t+1})$ between each of the lower bounds of hypercubes in the feature vector space and a query vector and the distance $U_i(W_{t+1})$ between each of the upper bounds of the hypercubes in the feature vector space and the query vector are measured according to the changed new distance measurement (step 110). Furthermore, the K'-th smallest upper bound $\phi$ is calculated (step 112).

Next, the distance $L_i(W_{t+1})$ between the lower bound of i-th hypercube in the corresponding vector space and the query vector is compared with a minimum value

$$\min\left(\phi, r_{t+1}^{u}, \phi_{t+1}^{u}\right)$$

of the K'-th smallest upper bound $\phi$ calculated in step 112, $r_{t+1}^{u}$ and $\phi_{t+1}^{u}$ (step 114). If the distance $L_i(W_{t+1})$ is less than or equal to the minimum value

$$\min\left(\phi, r_{t+1}^{u}, \phi_{t+1}^{u}\right),$$

a relevant hypercube is set as a candidate hypercube (step 116) and if not, the relevant hypercube is excluded (step 118).

Referring to pseudo code line 202 in Figure 2, it is determined whether or not the distance $L_i(W_{t+1})$ between the lower bound of i-th hypercube in the corresponding vector space and the query vector is smaller than all of the K'-th smallest upper bound $\phi$, $r_{t+1}^{u}$ and $\phi_{t+1}^{u}$ and relevant hypercube $P_i$ is selected as a candidate hypercube as shown in pseudo code line 204. Referring to pseudo code line 206, if the requirements shown in pseudo code line 202 are satisfied, the relevant hypercube $P_i$ is selected as a candidate hypercube, and the upper bound $\phi$ is updated with reference to the distance $U_i(W_{t+1})$ (step 120).

Next, assuming that N is a positive integer denoting the number of objects in the database or hypercubes, it is determined whether i reaches N (step 124), and if i has not reached N, the steps 114 - 124 are repeated until the approximation level filtering is performed on all N hypercubes.

According to the method described above, for a hypercube to be set as a candidate hypercube, the hypercube must meet new requirements determined from the previous distance measurement information such as pseudo code line 202 illustrates. Thus, requirements for selecting candidate hypercubes are further limited, thereby reducing the number of selected candidate hypercubes.

Then, data level filtering is performed. During the filtering, a distance measurement between each of all feature vectors in the candidate hypercubes and the query vector is performed (step 126) to determine K' nearest neighbour vectors as found feature vectors depending on the result of the distance measurements performed in the step 126 thereby completing a search (step 128). In this case, the number of candidate hypercubes is reduced, which reduces the computational complexity in measuring the distance between each of all feature vectors in the candidate cubes and the query vector. Thus, a search speed can be improved when searching for a feature vector having features similar to a query vector.

That is, according to the search method as described, the number of candidate approximation regions in a varying distance measurement is reduced thereby improving the search speed, and if new approximation regions are included, database can be updated fast.

Although the preferred embodiments of this invention has been described with reference to the example that the feature vector space is partitioned into hypercubes and approximated, the invention is also applicable to feature vector spaces indexed by other known index structures such as R-tree, R* tree, SR-tree and X-tree. It will be understood by those skilled in the art that various changes in form and details may be made therein without departing from the spirit and scope of the invention as defined by the appended claims.

The search method according to the present invention can be written as a program executed on a personal or server computer. The program codes and code segments constructing the program can be easily inferred by computer programmers in the industry. Furthermore, the program can be stored in a computer-readable recording medium. Such recording media include magnetic recording media and optical recording media. Additionally, the codes may be in the form of an electric or electromagnetic signal.

According to the present invention, the number of approximation regions is reduced during a varying distance measurement, which improves a search speed.

**Claims**

1. A method for adaptively searching a feature vector space, the method comprising the steps of:

    (a) performing a similarity measurement on a given query vector within the feature vector space; and
    (b) applying search conditions limited by the result of the similar measurement obtained in the step (a) and performing a changed similarity measurement on the given query vector.

2. The method of claim 1, wherein the step (b) comprises the steps of

(b-1) obtaining candidate approximation regions by performing approximation level filtering according to a distance measurement limited by the result of the similar measurement obtained in the step (a); and
(b-2) performing data level filtering on obtained candidate approximation regions.

3. The method of claim 1, wherein the step (a) comprises the steps of:

(a-1) obtaining a predetermined number of nearest candidate approximation regions by measuring the distance between the query vector and each approximation region; and
(a-2) obtaining K nearest neighbor feature vectors by measuring the distances between all feature vectors in the obtained candidate approximation regions and the query vector, where K is a positive integer.

4. The method of claim 3, wherein the step (b-1) comprises the steps of:

(b-1-1) calculating K'-th shortest distance for the K nearest neighbor feature vectors obtained according to the previous distance measurement according to the changed distance measurement where K' is a positive integer, and setting the calculated distance as $r_{t+1}^{u}$ ; and
(b-1-2) calculating K'-th smallest lower bound for the predetermined number of candidate approximation regions obtained according to the previous distance measurement according to the changed distance measurement and set as $\phi_{t+1}^{u}$ .

5. The method of claim 4, wherein the step (b-1) comprises the steps of:

(b-1-3a) measuring the distance $L_i(W_{t+1})$ between the lower bound of an approximation region and a query vector for a new distance measurement, wherein N is a positive integer denoting the number of objects in the feature vector space and i is a variable ranging from 1 to N;
(b-1-4) comparing the distance $L_i(W_{t+1})$ obtained in the step (b-1-3a) with a minimum value

$$\min\left(\phi, r_{t+1}^{u}, \phi_{t+1}^{u}\right)$$

of K-th smallest upper bound $\phi$, $r_{t+1}^{u}$ , and $\phi_{t+1}^{u}$ ;
(b-1-5) if the distance $L_i(W_{t+1})$ is less than or equal to the minimum value

$$\min\left(\phi, r_{t+1}^{u}, \phi_{t+1}^{u}\right)$$

setting the corresponding approximation region as a candidate approximation region; and
(b-1-6) if the distance $L_i(W_{t+1})$ is greater than the minimum value min

$$\min\left(\phi, r_{t+1}^{u}, \phi_{t+1}^{u}\right),$$

excluding the corresponding approximation region.

6. The method of claim 5, wherein the step (b-1) further comprises the steps of:

(b-1-3b) measuring the distance $U_i(W_{t+1})$ between the upper bound of the approximation region and the query vector for the new distance measurement, assuming that N is a positive integer denoting the number of objects in the feature vector space and i is a variable ranging from 1 to N;
(b-1-7) updating the K-th smallest upper bound $\phi$ referring to the distance $U_i(W_{t+1})$.

7. The method of claim 5 or 6, wherein the steps of (b-1-1) - (b-1-6) are repeated until the approximation level filtering is performed on all N approximation regions where N is a positive integer denoting the number of objects in a database.

8. The method of claim 3, wherein the step (b-2) comprises the steps of:

(b-2-1) performing a distance measurement between each of all feature vectors in the candidate approximation regions and the query vector; and

(b-2-2) determining K' nearest neighbor vectors as retrieved vectors depending on the result of the distance measurements performed in the step (b-2-1).

# FIG. 1A

START

OBTAIN PREDETERMINED NUMBER OF NEAREST CANDIDATE HYPERCUBES BY MEASURING DISTANCE BETWEEN QUERY VECTOR AND EACH HYPERCUBE —102

OBTAIN K NEAREST NEIGHBOR FEATURE VECTORS BY MEASURING DISTANCE BETWEEN QUERY VECTOR AND EACH OF ALL FEATURE VECTORS IN CALCULATED CANDIDATE CUBES —104

CALCULATE K'-th SHORTEST DISTANCE FOR K NEAREST NEIGHBOR VECTORS OBTAINED ACCORDING TO PREVIOUS DISTANCE MEASUREMENT ACCORDING TO CHANGED DISTANCE MEASUREMENT SET CALCULATED DISTANCE AS $r_{t+1}^u$ —106

CALCULATE K'-th SMALLEST LOWER BOUND FOR PREDETERMINED NUMBER OF CANDIDATE HYPERCUBES OBTAINED ACCORDING TO PREVIOUS DISTANCE MEASUREMENT AND SET SAME AS $\Phi_{t+1}^u$ —108

MEASURE DISTANCE $L_i(W_{t+1})$ BETWEEN LOWER BOUND OF HYPERCUBE IN FEATURE VECTOR SPACE AND QUERY VECTOR AND DISTANCE $U_i(W_{t+1})$ BETWEEN UPPER BOUND OF HYPERCUBE IN FEATURE SPACE AND QUERY VECTOR —110

CALCULATE K'-th SMALLEST UPPER BOUND $\Phi$ —112

A

# FIG. 1B

```
( A )
```

114

$L_i(W_{t+1}) \leq \min(\Phi, r_{t+1}^u, \Phi_{t+1}^u)$

NO →

YES → 116

118

**EXCLUDE RELEVANT HYPERCUBE**

**SET RELEVANT HYPERCUBE AS CANDIDATE HYPERCUBE**

120

**UPDATE $\Phi$ REFERRING TO $U_i(W_{t+1})$**

124

$i=N?$

NO →

YES ↓

**PERFORM DISTANCE MEASUREMENT BETWEEN EACH OF ALL FEATURE VECTORS IN CANDIDATE HYPERCUBES AND QUERY VECTOR** —126

**DETERMINE K' NEAREST NEIGHBOR VECTORS AS RETRIEVED FEATURE VECTORS DEPENDING ON RESULT OF DISTANCE MEASUREMENTS IN STEP 126** —128

( END )

# FIG. 2

Begin

initialize $\Phi$

count=0;

for i=1 to N

    compute $L_i(W_{t+1})$ and $U_i(W_{t+1})$ for $P_i$

202 —— if $L_i(W_{t+1}) \leq r^u_{t+1}$ and $L_i(W_{t+1}) \leq \Phi^u_{t+1}$ and $L_i(W_{t+1}) \leq \Phi$

206 —— update $\Phi$

204 —— choose $P_i$

    end for

$N_1$ =count

End